# EUROPÄISCHE PATENTSCHRIFT

(11) **EP 1 605 104 B1**
(45) Veröffentlichungstag und Bekanntmachung des Hinweises auf die Patenterteilung: **03.07.2013**
(21) Anmeldenummer: 05010281.3
(22) Anmeldetag: 12.05.2005
(51) Int. Cl.: E02F 3/96, E04G 23/08

(54) **Abbruch-Arbeitsgerät zum Anbau an einen Ausleger**
Demolition tool mountable on a working arm
Appareil de démolition montable sur un bras mécanique

(30) Priorität: 08.06.2004 DE 102004028011
(43) Veröffentlichungstag der Anmeldung: 14.12.2005
(73) Patentinhaber: Atlas Copco Construction Tools GmbH, 45143 Essen (DE)
(72) Erfinder: Schipp, Sebastian, 48653 Coesfeld (DE); Lohmann, Stefan, 45470 Mülheim (DE)
(74) Vertreter: Vomberg, Friedhelm

(56) Entgegenhaltungen:
- EP-B- 0 435 702
- WO-A-01/28687
- FR-A- 2 822 482
- US-A- 4 670 983

## Beschreibung

Die Erfindung betrifft ein Abbruch-Arbeitsgerät zum Anbau an einen Ausleger einer Vorrichtung, insbesondere eines Baggers, mit einem Halterahmen, an dem mittels eines gemeinsamen Bolzens ein Paar von Zangenarmen befestigt ist, von denen mindestens ein Zangenarm um die durch die Längsachse des gemeinsamen Bolzens festgelegte Drehachse so schwenkbar ist, dass die Zangenarme in eine offene und eine geschlossene Stellung bewegbar sind, wobei die Zangenarme Kupplungsmittel aufweisen, die nach Entfernung des gemeinsamen Bolzens einer Verschiebung der Zangenelemente in senkrecht zur Drehachse liegenden Richtungen entgegenwirken oder nur über einen begrenzten Weg erlauben und wobei die Kupplungsmittel auf zwei sich gegenüberliegenden Flachseiten der Zangenarme angeordnet sind und jeweils parallel zur Drehachse verlaufende Mantelflächen aufweisen, die sich entweder aufgrund unterschiedlicher radialer Abstände von der Drehachse spielfrei oder mit geringem Spiel gegenüber liegen oder die in gleichen oder geringfügig unterschiedlichen Radialabständen nebeneinander liegen und von einem Ring umgriffen werden.

Abbruchzangen der hier angesprochenen Art werden - überwiegend als Anbauteil an Trägereinheiten wie beispielsweise Hydraulikbaggern befestigt - zum Abbau von Beton oder Metallbauteilen verwendet. Eine solche Abbruchzange ist beispielsweise in der EP 0 435 702 B1 beschrieben. Um das Brechen von Werkstücken mit einer solchen Kraft auszuführen, dass der Druck der Backenschneiden eine nahezu maximale Größe hat und die nötige Brechkraft unabhängig davon eingesetzt wird, ob sich der Ausleger des Baggers in der optimalen Stellung befindet, müssen die beiden als Brechbacken dienenden Zangenarme derart befestigt sein, dass mindestens ein Zangenarm unabhängig von dem zweiten Arm betreibbar ist, so dass eine abgestufte Backenbewegung in der erwünschten Weise möglich wird. Optimal sind zwei bewegliche Zangenarme, die sich dem Werkstück anpassen können, ohne große Kräfte auf das Trägergerät zu übertragen. Die Zangenarme können von je einem oder gemeinsam von einem Zylinder betätigt werden.

Bisweilen ist es jedoch erforderlich, für verschiedene Anwendungen unterschiedliche Abbruch-Arbeitsgeräte zu verwenden, weshalb es nützlich ist, wenn die Zangenarme lösbar und damit austauschbar befestigt sind. In der EP 0 435 702 B1 wird daher vorgeschlagen, zwei Zangenarme an einem gemeinsamen Drehlager zu befestigen, das diese Zangenarme drehbar miteinander verbindet und auswechselbar und drehbar an einem Halterahmen des Abbruch-Arbeitsgerätes befestigt, so dass sich die Zangenarme um eine einzige, durch das Drehlager festgelegte Achse auf bestimmten Arbeitsbahnbögen bewegen. Das Drehlager weist zudem Kupplungsmittel auf, welche die Zangenarme zusammenhalten, wenn das Drehlager und die Zangenarme vom Halterahmen abmontiert werden. Insbesondere besteht das gemeinsame Drehlager aus einem hohlen Verbinder, also einem hülsenförmigen Körper, der notwendiges Bestandteil des Drehlagers ist und der die Zangenarme lagert und drehbar miteinander verbindet und einen sich durch diesen Verbinder erstreckenden, auswechselbaren Befestigungszapfen umfasst. Der hülsenförmige Körper hält die Abrissbacken in einer vorbestimmen, gegenseitigen Lage zusammen, wenn der Befestigungszapfen aus dem Halterahmen entfernt wird. Hierdurch ergibt sich der Vorteil, dass die beiden Zangenarme beim Einbau bzw. Wiedereinbau nicht zueinander ausgerichtet und justiert werden müssen. Die Zangenarme können vielmehr als miteinander verbundene Einheit vom Halterahmen am Ausleger demontiert und so lange bei Seite gelegt werden, bis sie für den nächsten Einsatz wieder montiert werden. Hierzu ist lediglich das Zangenarmpaar über den Verbindungsbolzen mit dem Halteteil zu befestigen.

Die WO 01/28687 beschreibt ein Abbruch-Arbeitsgerät der eingangs genannten Art, bei dem die zangenartigen Werkzeuge auf einem Bolzen drehbar angeordnet sind. Die Werkzeuge besitzen gestuft ausgebildete Profile, die gegenseitig ineinander greifen, so dass Parallelverschiebungen des einen zangenartigen Werkzeuges gegenüber dem anliegenden weiteren zangenartigen Werkzeuges senkrecht zur Bolzenachse verhindert werden.

Es ist Aufgabe der vorliegenden Erfindung, eine Alternativ-Lösung für ein Abbruch-Arbeitsgerät zu entwickeln, bei dem der Vorteil erhalten bleibt, dass die beiden Zangenarme nach Lösen des Befestigungsbolzens am Halteteil in ihrer gegenseitigen Ausrichtung fixiert bleiben, wobei jedoch auf eine gemeinsame hülsenförmige Verbindungsbüchse verzichtet wird.

Diese Aufgabe wird durch ein Abbruch-Arbeitsgerät nach Anspruch 1 gelöst. Die Kupplungselemente sind an zwei sich gegenüber liegenden Flachseiten der Zangenarme angeordnet und weisen jeweils parallel zur Drehachse verlaufende Mantelflächen aufweisen, die sich entweder auf Grund unterschiedlicher radialer Abstände von der Drehachse spielfrei oder mit geringem Spiel gegenüber liegen oder die in gleichen oder geringfügig unterschiedlichen Radialabständen nebeneinander liegen und von einem Ring umgriffen werden. Dies umfasst auch Ausführungsvarianten, bei denen die Mantelflächen etwa gleiche Radien besitzen, der Ring jedoch unterschiedliche Innendurchmesser aufweist. Insbesondere soll der Ring nahezu spielfrei auf einer Mantelfläche liegen und die andere spielbehaftet umschließen. Diese Ausgestaltung des Abbruch-Arbeitsgerätes hat den Vorteil, dass auf der einen Seite nach Lösen des Zangenarmpaares von dem Halterahmen die vorhandenen Kupplungselemente eine gegenseitige Verschiebung der Zangenarme verhindern, andererseits eine Trennung der Zangenarme voneinander leichter als in dem beispielsweise in der EP 0 435 702 B1 beschriebenen Gerät möglich ist. Die vorgenannten Kupplungselemente sind somit kein Bestandteil des Drehlagers der Zangenarme. Weiterhin kann auf einfache Weise eine Aufhebung der Kopplung der Zangenarme erfolgen, sogar wenn die Zangenarme im Halterahmen eingesetzt sind. Somit ist es möglich, nur einen Zangenarm, vorzugsweise den Einfacharm zu wechseln ohne das Zangenpaar aus dem Halterahmen zu entfernen. Insbesondere sofern ein Zangenarm wegen etwaiger dort verschlissener Schneidkanten oder Messer ausgetauscht werden muss, kann dies wesentlich schneller geschehen, ohne dass der Vorteil preisgegeben wird, die Zangenarme auch nach Ablösung vom Halterahmen als Einheit zwischenlagern zu können. Die erfindungsgemäße Lösung ermöglicht dem Anwender die Wahl Zangenarme mit aktivierter oder deaktivierter Kopplung einzubauen bzw. in eingebautem Zustand die Kopplung zu aktivieren oder zu deaktivieren.

So kann nach einer ersten Ausführungsvariante aus einer Zangenarmflachseite ein Ringzylinder herausragen und aus der gegenüberliegenden Zangenarmflachseite mindestens drei Stifte, vorzugsweise vier oder mehr Stifte, die auf einem Kreisbogen um die Drehachse mit einem Radius liegen, der vom Radius der gegenüberliegenden Mantelflächen des Ringzylinders verschieden ist. Die Stifte liegen somit außen oder innen am genannten Ringzylindermantel an. Vorzugsweise sind die genannten Stifte als lösbare Bolzen in einem Zangenarm befestigt.

Nach einer weiteren Ausgestaltungsform ragen aus einer Flachseite des einen Zangenarmes ein Ringzylinder und aus der gegenüberliegenden Flachseite des anderen Zangenarmes ein Halbringzylinder und ein weiteres stiftförmiges oder im wesentlichen quaderförmiges Element oder ein weiteres teilzylinderförmiges Element heraus, wobei der Ringzylinder einerseits und der Halbringzylinder so wie das weitere Element andererseits in unterschiedlichen radialen Abständen von der Drehachse angeordnet sind. Im Rahmen der vorliegenden Erfindung ist es auch möglich, dass aus beiden gegenüberliegenden Flachseiten jeweils Ringzylinder mit unterschiedlichen radialen Abständen zur Drehachse herausragen.

Weiterbildungen der Erfindung sind in den Unteransprüchen beschrieben.

Nach einer weiteren Ausführungsform der Erfindung weist einer der Zangenarme ein im Querschnitt U-förmiges Profil auf, während der andere Zangenarm zwischen den beiden freien Schenkeln des U-förmigen Profils angeordnet ist, wobei vorzugsweise dieser andere Zangenarm durch einen Bolzen, der einen der freien Schenkel durchgreift, gegen eine Relativbewegung in Richtung der Drehachse gesichert ist, wobei der Bolzen in Kopplungsdarstellung die Zangenarme so gegeneinander fixiert, dass die Kupplungselemente eine Relativbewegung der Zangenarme quer zur Schwenkachse verhindern oder begrenzen. Diese Ausführungsform hat sich als besonders stabil auch bei den durchzuführenden Brech- und Scherarbeiten erwiesen.

Nach einer weiteren Ausführungsform der Erfindung ragen aus den sich gegenüberliegenden Flachenseiten der Zangenarme jeweils zwei konzentrisch zur Drehachse liegende Zylinder oder Teilzylinder heraus, deren freie Stirnflächen sich gegenüber liegen und deren Außenmantelflächen auf demselben oder geringfügig unterschiedlichen Radius liegen, wobei der diese Mantelflächen umgreifende Ring als lösbarer und vorzugsweise aus zwei Hälften bestehender Spannring ausgebildet ist. In diesem Fall übernimmt der Spannring die Fixierung der gegenseitigen Lage der Zangenarme zueinander, nach dem der Bolzen zur Befestigung mit dem Halterahmen entfernt worden ist. Alternativ kann der Spannring auch einstückig ausgebildet sein, wobei er eine Breite hat, die eine Verschiebung des Spannringes in Längsrichtung der durch den Bolzen definierten Drehachse ermöglicht, so dass eine der Mantelflächen freilegbar ist.

Alternativ zu den geschilderten Ausführungsformen ist es im Rahmen der Erfindung auch möglich, dass aus sich gegenüberliegenden Flachseiten der Zangenarme jeweils Zylinderteilstücke herausragen, die auf unterschiedlichen Radien liegen. Vorzugsweise sollen sich die innen liegenden Zylinderteilstücke über jeweilige Winkelmaße erstrecken, die es ermöglichen, dass nach einer Drehung der Zangenarme relativ zueinander die Zylinderstücke quer zur Schwenkachse verschoben werden können, wobei die inneren Zylinderstücke durch die "Lücken" der äußeren Zylinderstücke bewegt werden. Der Drehwinkel, um den die Zangenarme verschwenkbar sind, kann durch einen aus der Flachseite des Zangenarmes herausragenden Anschlagbolzen beschränkt sein. Auf diesen Anschlagbolzen trifft eines der Zylinderteilstücke eines Zangenarmes bei entsprechender Verschwenkung.

Um den Einbau des Zangenarmpaares in den Halterahmen zu erleichtern, ist nach einer weiteren Ausbildung der Erfindung vorgesehen, dass der Halterahmen und das Paar der Zangenarme jeweilige Bauteil bilden, von denen das eine Bauteil beidseitig mit ringförmigen Absätzen und das andere Bauteil mit Anlage- und Zentrierflächen versehen ist. Die genannten Absätze und die Anlage- und Zentrierflächen richten die Bauteile quer zur Längsachse des Bolzens so aus, dass die Bauteile zueinander beim Zusammenführen quer zur Bolzenachse vorzentriert werden, vorzugsweise derart, dass sich die Bauteile beim Einführen des Bolzens noch um ein geringes Maß gegeneinander verschieben und dass bei eingebautem Bolzen die ringförmigen Absätze und die Anlage- und Zentrierflächen nicht mehr in Kontakt sind, d. h. berührungsfrei nebeneinander liegen. Nach dieser Version können die ringförmigen Absätze entweder auf dem Halterahmen oder an dem Zangenarmpaar vorhanden sein, wobei jeweils das komplementäre Bauteil, nämlich das Zangenarmpaar oder der Halterahmen die Anlage- und Zentrierflächen aufweist.

Vorzugsweise können die Anlage- und Zentrierflächen entweder aus teilkreisförmigen Abschnitten mit auslaufenden Einführschrägen, die einen Winkel zwischen 10° und 90° bilden oder aus zwei oder mehr winklig zueinander angeordneten Zentrierflächen, gegebenenfalls mit einem zusätzlichen Endanschlag bestehen. Durch diese Schrägstellung wird die Vorzentrierung herbeigeführt, wobei jedoch die Anordnung und Ausrichtung der Anlage- und Zentrierflächen und der ringförmigen Absätze dergestalt ist, dass nach dem Einführen des Bolzens und der damit verbundenen Endzentrierung die gegenseitigen ringförmigen Absätze und die Anlage- und Zentrierflächen wieder zu einer berührungsfreien Lage zueinander bewegt werden. Hiermit wird eine geometrische Überbestimmung vermieden. Andererseits sollen die Lage der Einzelschrägen und deren Winkligkeit zueinander so ausgebildet sein, dass ein "Einfädeln" des Zangenarmpaares in den Halterahmen erleichtert wird.

Die ringförmigen Absätze können nach einer weiteren Ausgestaltung der Erfindung Bestandteil der Lagerbuchse sein, auf der Lagerbuchse zentriert sein oder an dem Halterahmen oder dem Zangenarmpaar befestigt oder Bestandteil dessen sein.

Es können auch zusätzliche Schrägflächen zur Zentrierung des Bauteils parallel zur Bolzenachse vorhanden sein. Diese "Hilfsschrägen" können entweder als Fasen an den ringförmigen Absätzen angeordnet sein oder als Schrägen an dem Bauteil mit den Anlage- und Zentrierflächen.

Weitere Vorteile und Ausführungsbeispiele der vorliegenden Erfindung werden im Folgenden anhand der Zeichnungen erläutert. Es zeigen:
- Fig. 1: eine Seitenansicht eines Abbruch-Arbeitsgerätes,
- Fig. 2: eine Seitenansicht eines Zangenarmpaares,
- Fig. 3-14: jeweils Querschnittsansichten von zwei Zangenarmen und jeweilige Draufsichten entlang der dargestellten Schnittlinie, wobei einer der Zangenarme ein U-Profil aufweist, das den anderen Zangenarm übergreift,
- Fig. 15: eine Querschnittsansicht von zwei gleich hohen Zangenarmen und eine Draufsicht entlang der dargestellten Schnittlinie,
- Fig. 16: eine Teilquerschnittsansicht eines Zangenarmpaares,
- Fig. 17: eine Teil-Draufsicht auf das Halteteil,
- Fig. 18: eine Querschnittsansicht durch das Halteteil gemäß Fig. 20,
- Fig. 19: eine Teil-Draufsicht auf das Halteteil und eine Querschnittsansicht mit einer alternativen Ausführungsform zu Fig. 17, 18,
- Fig. 20: einen Querschnitt eines Zangenarmpaares mit einem Halteteil,

Wie bereits eingangs erwähnt, werden Abbruch-Arbeitsgeräte an Baggern oder Kränen angebaut, um Beton, Stahl oder andere Materialien zu zerkleinern. Einige dieser Abbruch-Arbeitsgeräte sind mit Zangenarmen ausgeführt, bei denen sich zumindest ein Zangenarm um eine gemeinsame Achse bewegt und die Arme einzeln oder als gekoppeltes Armpaar von dem sie tragenden Gehäuse demontierbar sind. Ein Austausch der Zangenarme wird vorgenommen, um die Zerkleinerungsarbeiten mit z. B. anders gestalteten Armen oder um Reparatur- oder Wartungsarbeiten durchzuführen, die bei den verschleißintensiven Einsätzen der Abbruch-Arbeitsgeräte von wesentlicher Bedeutung sind.

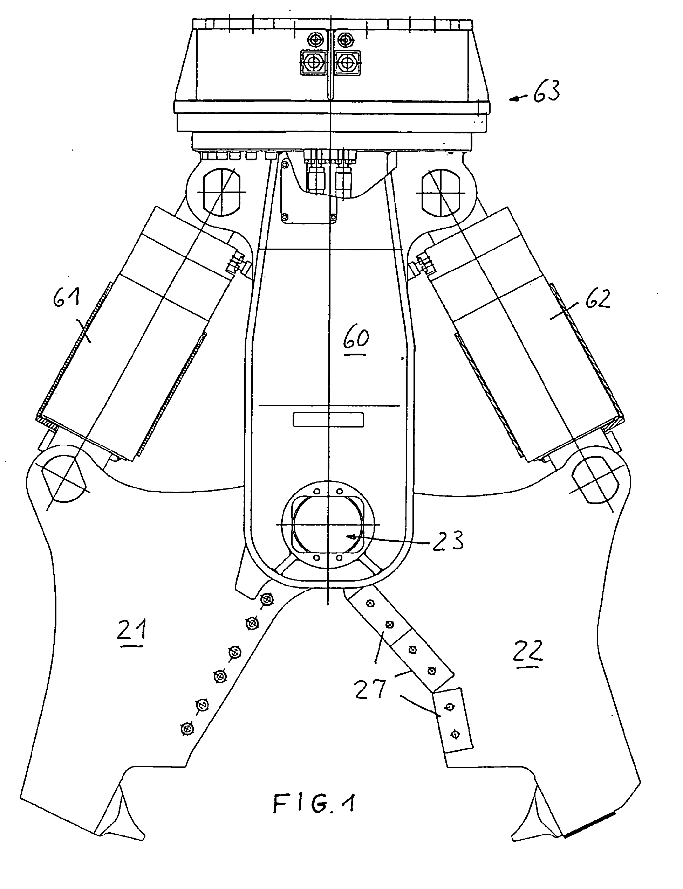

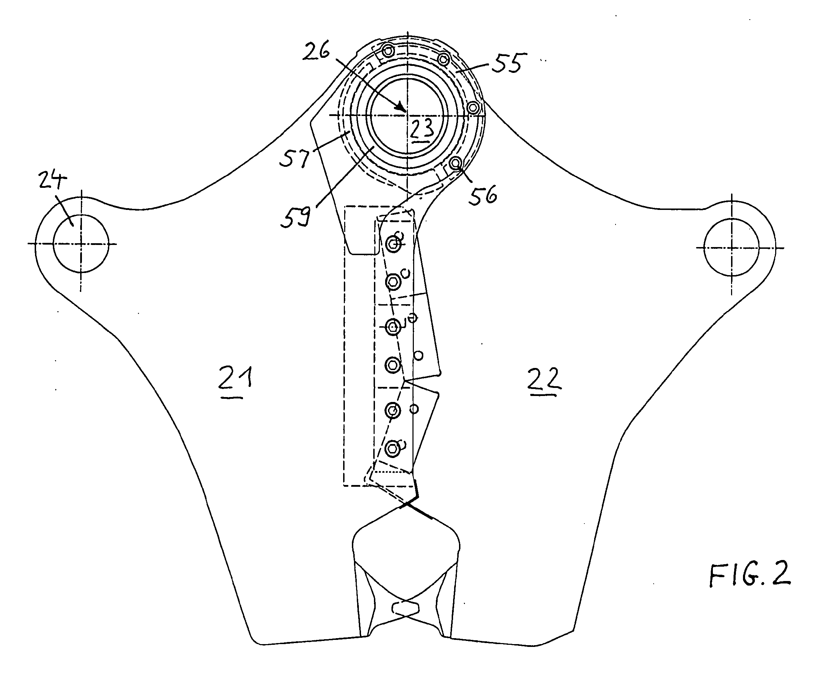

Wie prinzipiell nach dem Stand der Technik bekannt und in Fig. 1 dargestellt, sind die ein Paar bildenden Zangenarme 21, 22 mit einem Halteteil 60 über einen Bolzen verbindbar, der durch die gemeinsame Bohrung 23 gesteckt wird. Die Bohrungen 24 und 25 (siehe Fig. 2) bieten jeweilige Aufnahmen für die Enden von Hydraulikzylindern 61 und 62, mittels derer ein Verschwenken der Zangenarme 21 und 22 um die gemeinsame Drehachse 26 möglich ist. Das Halteteil 60 ist an einem Rahmen 63 befestigt, der über eine nicht dargestellte Einrichtung an einen Ausleger eines Baggers kippbar ist und drehbar bewegt werden kann.

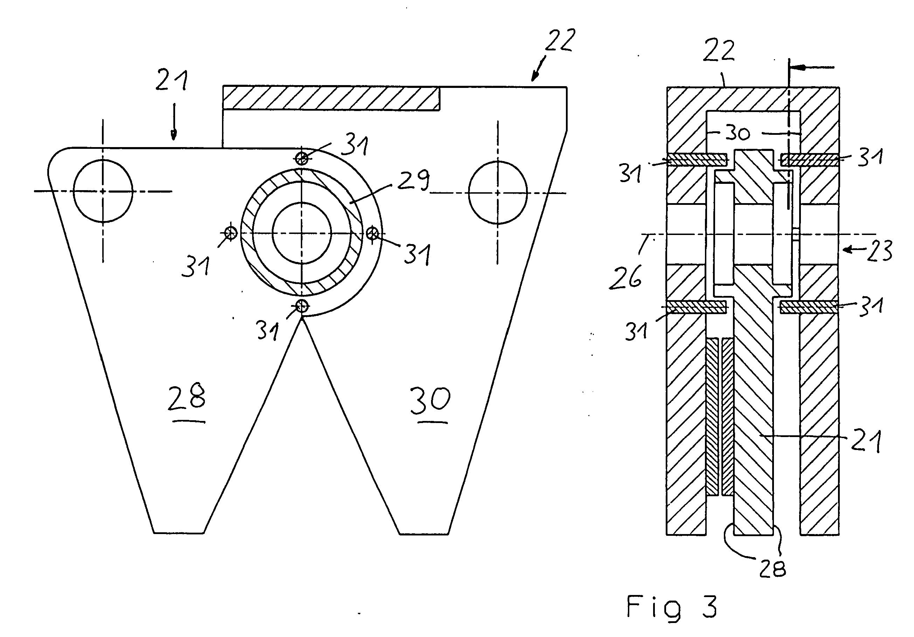

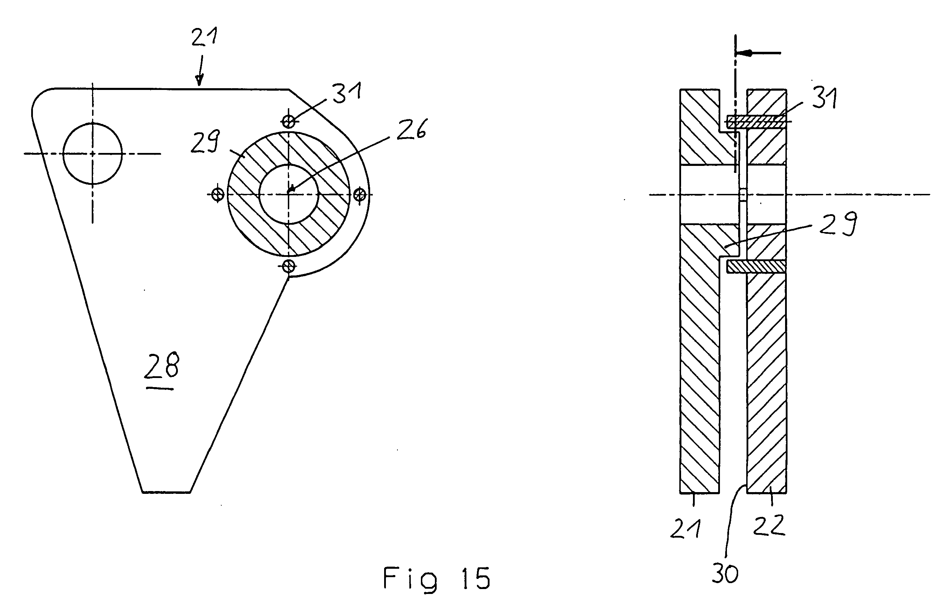

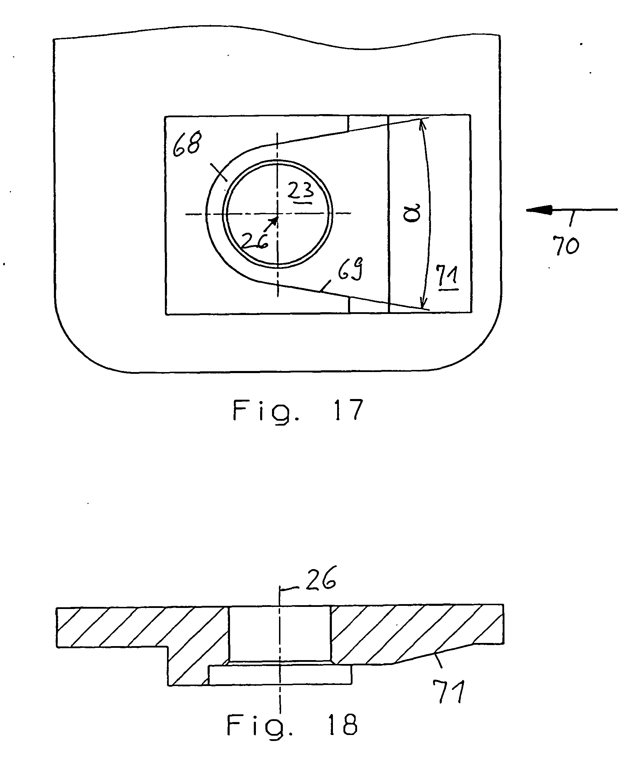

Die Zangenarme sind zum Brechen von Gestein oder ähnlichem mit Schneidkanten oder Messern 27 bestückt, die vorzugsweise austauschbar montiert sind. Die Zangenarme 22 können ein U-förmiges Profil mit zwei Schenkeln besitzen, zwischen denen der komplementäre Zangenarm 21 angeordnet ist (siehe Fig. 3 bis 17). Die Zangenarme 21, 22 können jedoch auch die in Fig. 18 dargestellte Form aufweisen.

Erfindungsgemäß können die beiden Zangenarme 21, 22 als Einheit vom Halteteil 60 demontiert und abgelegt werden, so dass sie im Bedarfsfall durch entsprechende Befestigung ohne größere Justierarbeiten wieder einsetzbar sind. Um gegenseitige Verschiebungen der Zangenarme 21, 22 - etwa in der Zeichenebene von Fig. 2 - zu verhindern, bestehen verschiedene Möglichkeiten, die auf dem Grundprinzip basieren, dass Kupplungselemente auf zwei sich gegenüberliegenden Flachseiten der Zangenarme angeordnet sind und jeweils parallel zur Drehachse 26 verlaufende Mantelflächen aufweisen, welche die genannten gegenseitigen Verschiebungen blockieren. Wie in Fig. 2 zu erkennen, können an gegenüberliegende Flächen zweier Zangenarme einerseits ein Vollringzylinder 59 und von der anderen Seite her zwei Halbringzylinder 57, 55 herausragen, von denen einer (55) mit Schrauben 56 lösbar befestigt ist. Nach Fig. 3 oder 18 ragt aus der Zangenoberfläche 28 des Zangenarmes 21 (jeweils) ein Ringzylinder 29 heraus, wohingegen aus der gegenüberliegenden Oberfläche 30 des Zangenarmes 22 vier Stifte 31 herausragen, die in einem unterschiedlichen radialen Abstand zur Drehachse 26 wie der Außenmantel des Ringzylinders 29 liegen. Die Stifte 31 liegen entweder spielfrei oder unter geringem Spiel am Außenmantel des Ringzylinders 29 an, so dass Querbewegungen der Zangenarme 21 und 22 gegeneinander vermieden werden.

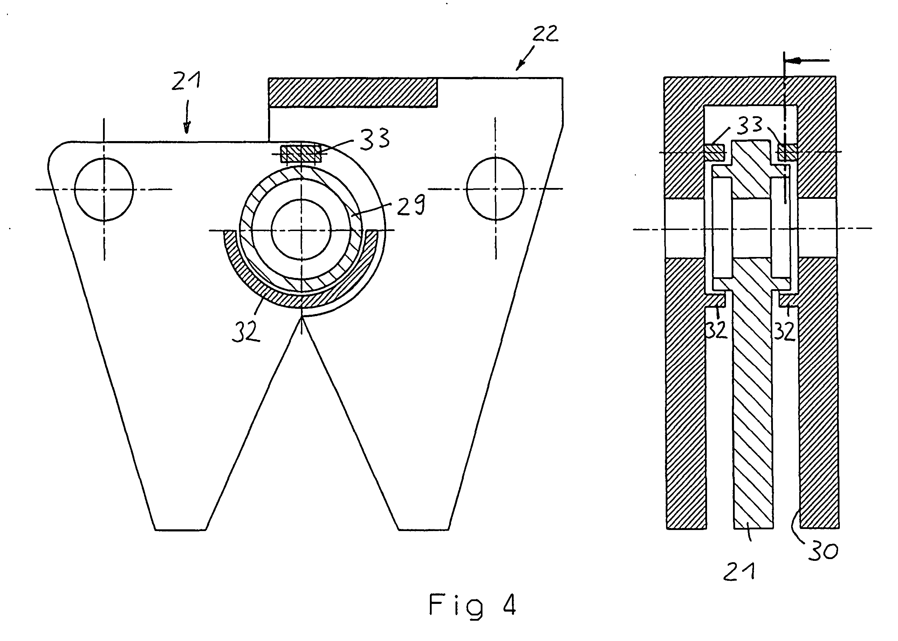

Nach Fig. 4 wird dieselbe Wirkung dadurch erreicht, dass an Stelle der Stifte 31 ein Halbzylinder 32 in Verbindung mit einem quaderförmigen Körper 33 in der dargestellten Anordnung verwendet wird. Hierbei liegen der Innenmantel des Halbzylinders 32 sowie der Außenmantel des Zylinders 29 eng oder unter einem geringen Spiel aneinander an, wohingegen der kubische Körper 33 "den oberen Begrenzungsanschlag" bildet.

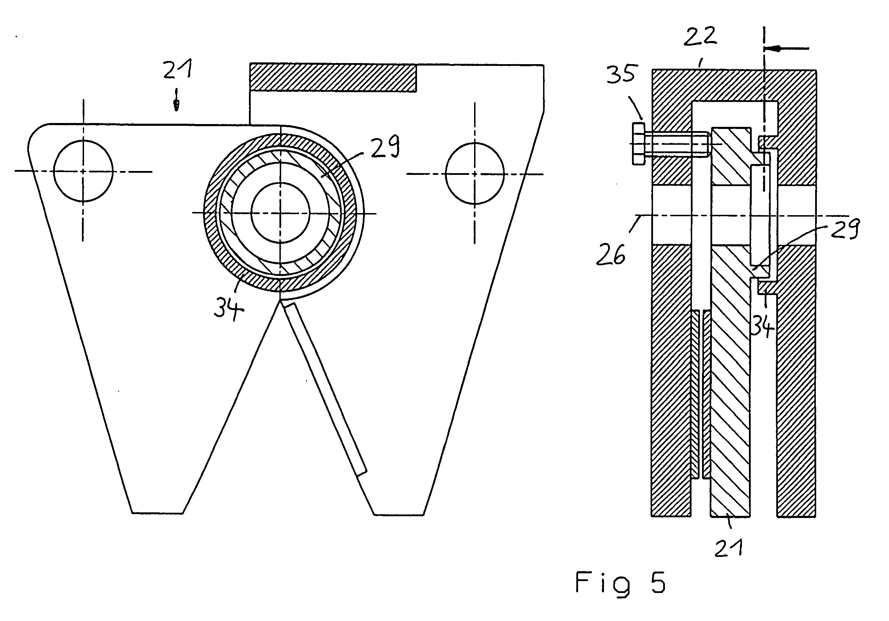

Die Lösung nach Fig. 5 arbeitet mit jeweiligen Ringzylindern 29 und 34, die in der dargestellten Weise ineinander greifen. Hierbei ist der Zangenarm 22 U-profilartig ausgebildet, wobei einer der Schenkel eine Öffnung mit einem eingeschraubten Bolzen 35 besitzt, der rückseitig an dem Zangenarm 21 anliegt, so dass dieser in seiner relativen Abstandslage zu dem anderen freien Schenkel des Zangenarmes 22 fixiert ist. Erst durch Lösen des Bolzens 35 können die Zangenarme 21 und 22 so auseinander geschoben werden, dass der blockierende Eingriff der Ringzylinder 29 und 34 aufgehoben wird.

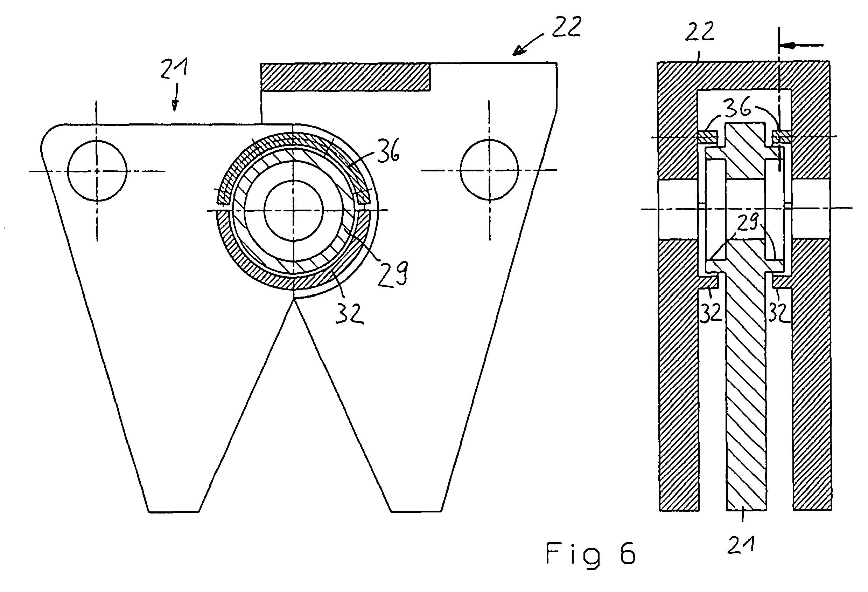

Nach Fig. 6 ist ein Halbzylinder 32 fest mit dem Zangenarm 22, z. B. durch Schweißen verbunden, während der andere Halbzylinder 36 lösbar am Zangenarm 22 befestigt ist. Die Ringzylinder 29 sind fest mit dem Zangenarm 2 verbunden.

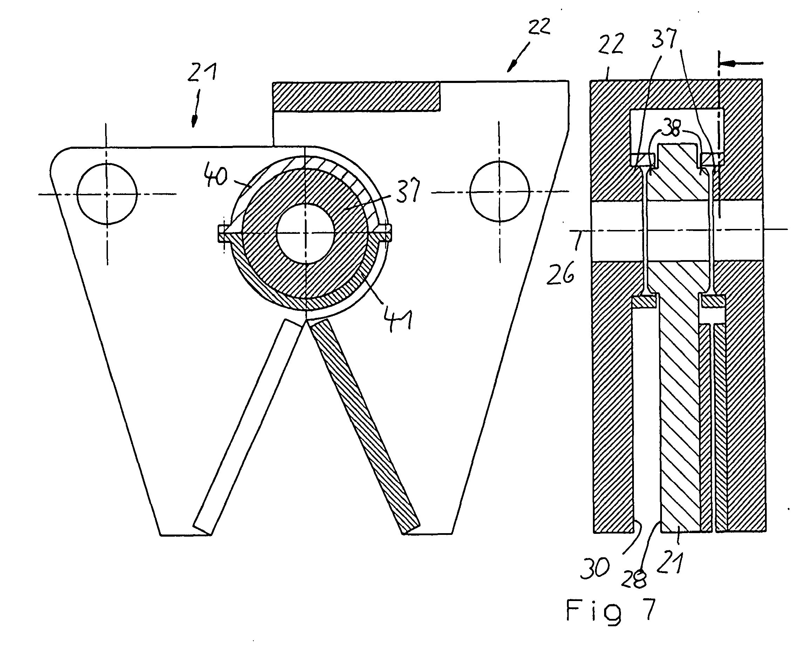

Bei der Ausführungsform in Fig. 7 ragen aus den sich jeweils gegenüberliegend Seiten 28 und 30 der Zangenarme 21 und 22 hohlzylinderförmige Ansatzstücke 37, 38 heraus, welche einen gleich großen oder geringfügig unterschiedlichen Außendurchmesser und als Innendurchmesser den Durchmesser der Durchgangsbohrung 23 besitzen. Zur Blockierung der Verschiebung der Zangenarme gegeneinander in senkrechter Richtung zur Drehachse 26 wird ein aus zwei Halbringen bestehender Spannring 40, 41 verwendet, der die beiden sich gegenüberstehenden Ringzylinder 37 und 38 umschließt, wobei die Radien der Ringzylinder und des Spannelementes 40, 41 so gewählt sind, dass der Ring eine Mantelfläche spielfrei, die andere spielbehaftet umfasst, was durch unterschiedliche Durchmesser der Ringzylinder 37, 38 oder durch ein Spannelement mit gestufter Innenmantelfläche realisiert werden kann.

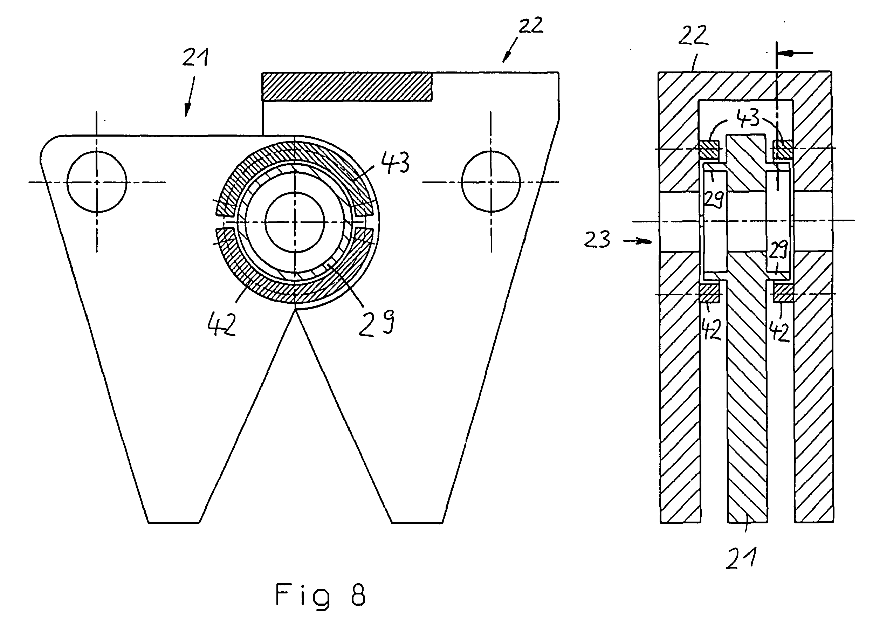

Bei der Lösung nach Fig. 8 wird auf zwei lösbar befestigte Halteringe 42, 43 zurückgegriffen, welche aus den Oberflächen des Zangenarmes 22 herausragen und die derart angeordnet sind, dass deren Innenmantel auf einem gleichen bzw. geringfügig größeren Radius liegt als der Außenmantel des Ringzylinders 29, der aus den Oberflächen des anderen Zangenarmes 21 herausragt.

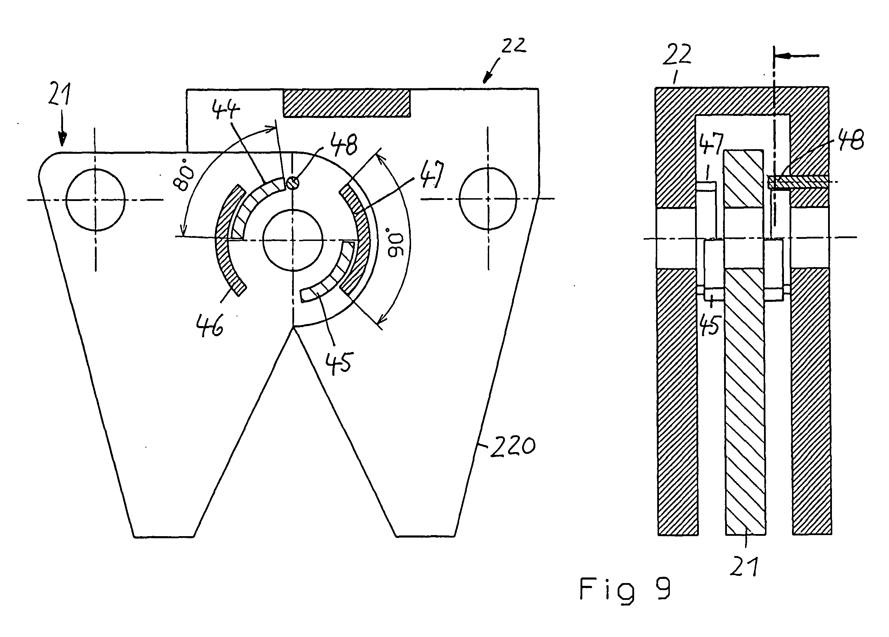

Bei der Ausführungsform nach Fig. 9 werden Zylinderteilstücke 44, 45, die aus der jeweiligen Oberfläche des Zangenarmes 21 herausragen, verwendet, die Zylinderteilstücken 46, 47 gegenüber stehen, die aus der Oberfläche des Zangenarmes 22 herausragen. Die Radien der Zylinderteilstücke 44, 45 und 46, 47 sind unterschiedlich groß, jedoch liegen die Zylinderteilstücke konzentrisch zur Bolzenaufnahmebohrung, und zwar dergestalt, dass die Außenmantelfläche der Zylinderteilstücke 44 und 45 gleich groß bzw. geringfügig kleiner ist als die Innenmantelfläche der Zylinderteilstücke 46 und 47, die bei einer Stellung der Zangenarme im geöffneten Zustand in der dargestellten Weise aneinander liegen. Wie dargestellt, übergreifen die Zylinderteilstücke 44 und 45 ein Winkelmaß von 80°, während die komplementären Zylinderteilstücke 46 und 47 ein Winkelmaß von 90° übergreifen. Der Schwenkweg der Zylinderteilstücke 46 und 47 wird durch einen Bolzen 48 begrenzt, der aus der Zangenoberfläche des Armes 21 herausragt. Durch diesen Bolzen werden Schwenkstellungen vermieden, bei denen die gegenseitige Blockierung gegen Querbewegungen aufgehoben wäre. Durch Lösen des Bolzens 48 kann jedenfalls eine Schwenkstellung eingestellt werden, die eine Querverschiebung der Zangenarme 21, 22 zueinander zulässt. Die Zangenarme können beispielsweise auf der Fläche 220 abgelegt werden, wobei sie durch ihr Eigengewicht bedingt in eine geschlossene Stellung übergehen.

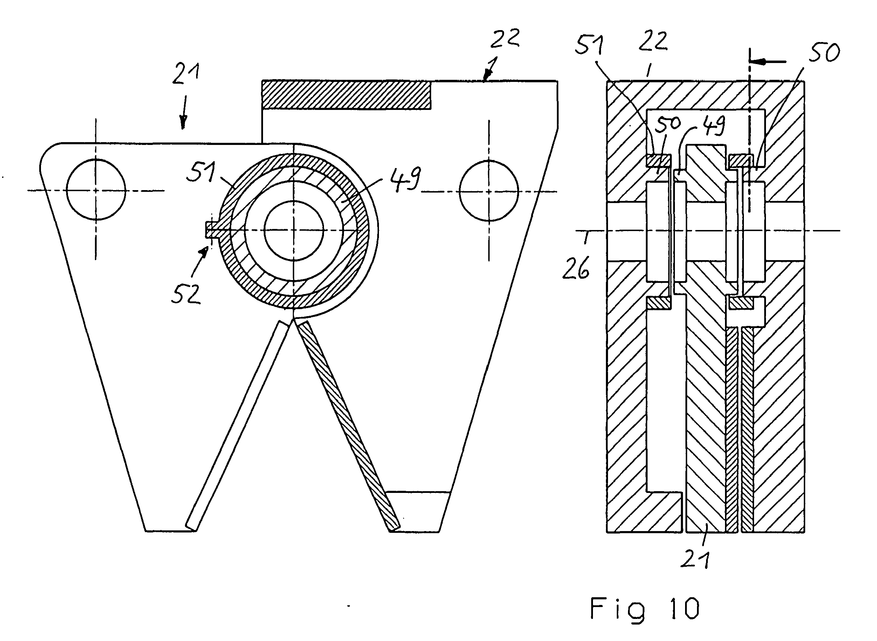

Bei der Ausführungsform nach Fig. 10 besitzen die Zangenarme 21 und 22 jeweils aus einander zugewandten Flächen auskragende Ringzylinder 49, 50, die entweder gleich große oder unterschiedliche Außenradien besitzen und die von einem Spannring 51 umgriffen werden, der nach Lockerung der Klemmung über die angedeutete Klemmschraube 52 entlang der Längsachse 26 der Bohrung 23 verschoben werden kann. In einer der Stellungen kann der Spannring 51 (siehe Darstellung links neben dem Zangenarm 21 in der Querschnittsansicht) eine Lage einnehmen, bei der der Ringzylinder 49 an dem Spannring 51 vorbei geführt werden kann.

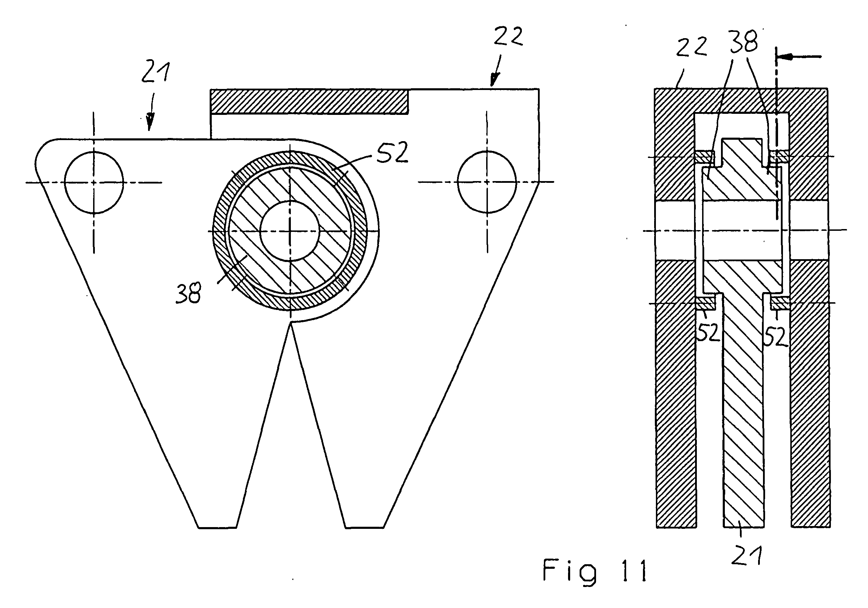

Bei der Lösung nach Fig. 11 besitzt der Zangenarm 21 hervorstehende Ringzylinder 38, die denjenigen entsprechen, die zur Fig. 7 erläutert worden sind.

An den innen liegenden Oberflächen des U-förmigen Zangenarmes 22 ist jedoch jeweils ein Ringzylinder 52 angeschraubt, so dass erst nach Lösen der Verschraubung dieses Ringzylinders 22 eine Relativverschiebung des Zangenarmes 21 zum Zangenarm 22 möglich ist.

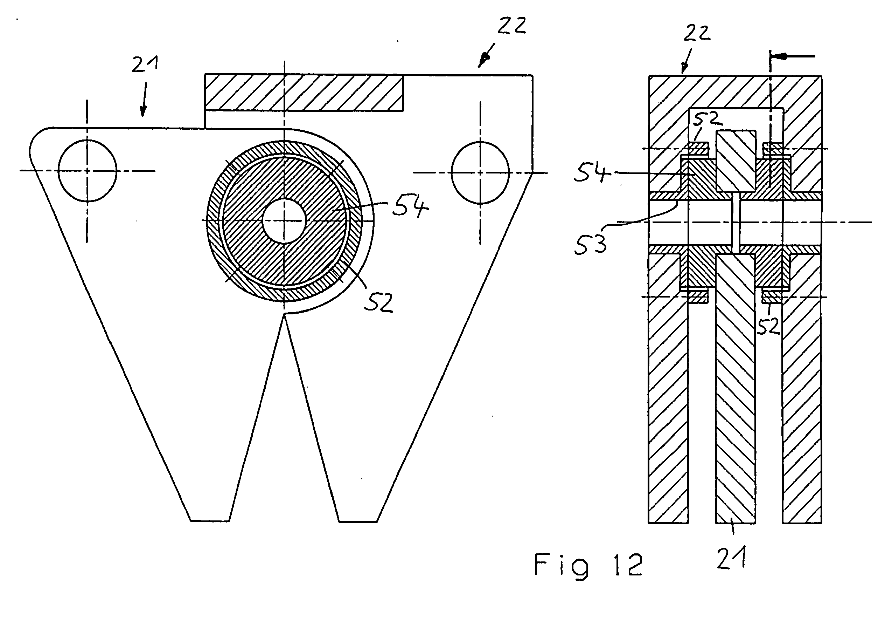

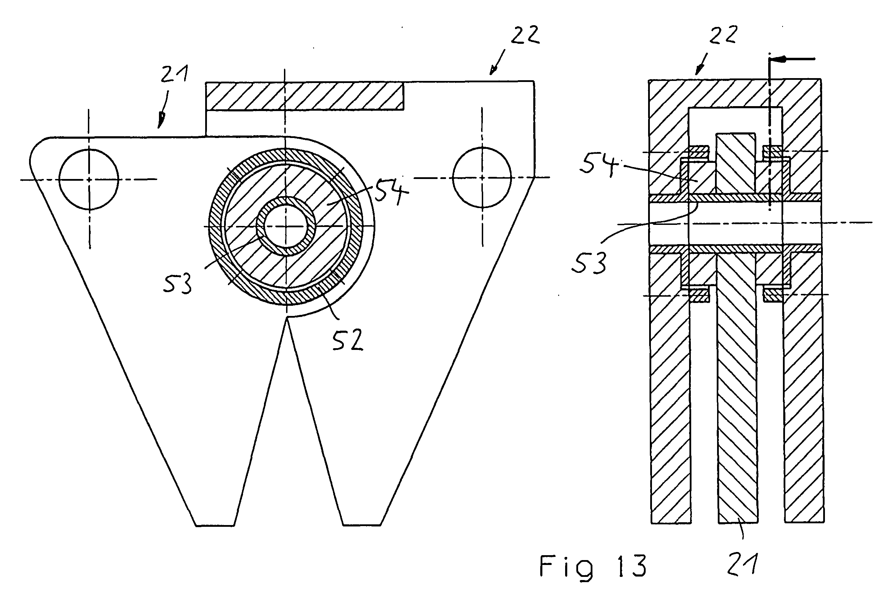

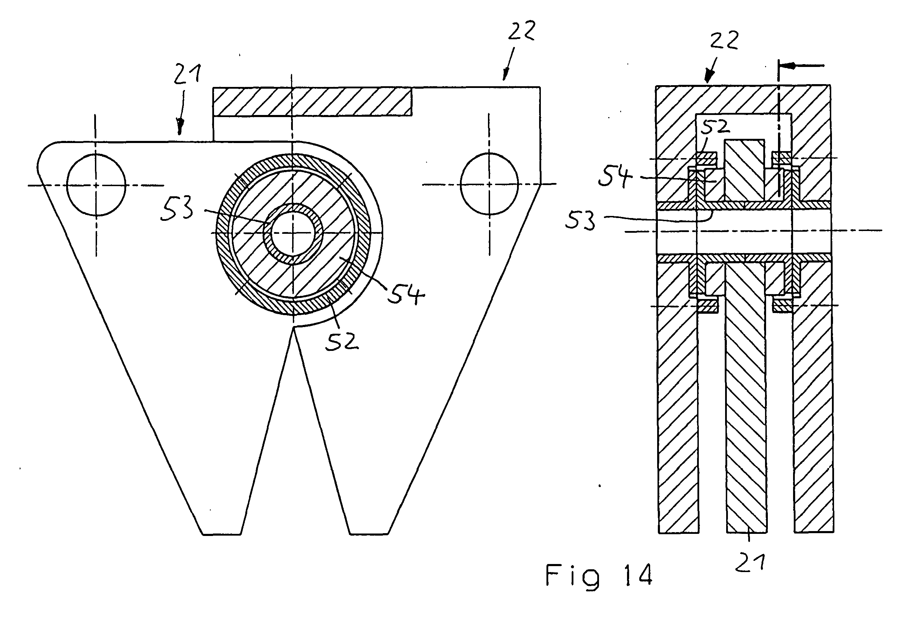

Auch bei der Ausführungsform nach Fig. 12 ist der Spannring 52 an den Innenseiten des Zangenarms 22 mittels lösbarer Schrauben befestigt. In diesem Fall besitzt die Lagerbuchse 53 einen ringförmigen Absatz 54, der bei montiertem Ringzylinder 52 Querbewegungen des Zangenarmes 21 gegenüber dem Zangenarm 22 begrenzt. Dieser ringförmige Absatz kann entweder einstückig mit der Lagerbuchse 53 ausgeführt sein oder auf der Lagerbuchse 53 angeordnet/zentriert sein (siehe Fig. 13 und 14). Auch nach Fig. 14 bilden spielfreie bzw. nahezu spielfrei auf der zweiteiligen Lagerbuchse angeordnete zentrierte Ringe mit ihren Außenflächen eine Ringfläche, wobei die Lagerbuchse 53 gegenüber dem Teil 54 in radialer Richtung zurückgesetzt ist.

Die Kupplungsmittel müssen nach der vorliegenden Erfindung nicht zwangsläufig feste Bestandteile der Zangenarme 21, 22 sein, sondern können auch Bestandteil der Lagerbuchse sein. Die Kupplungsmittel können ferner auch Lochscheiben sein, die auf der Lagerachse zentriert sind (siehe Fig. 13).

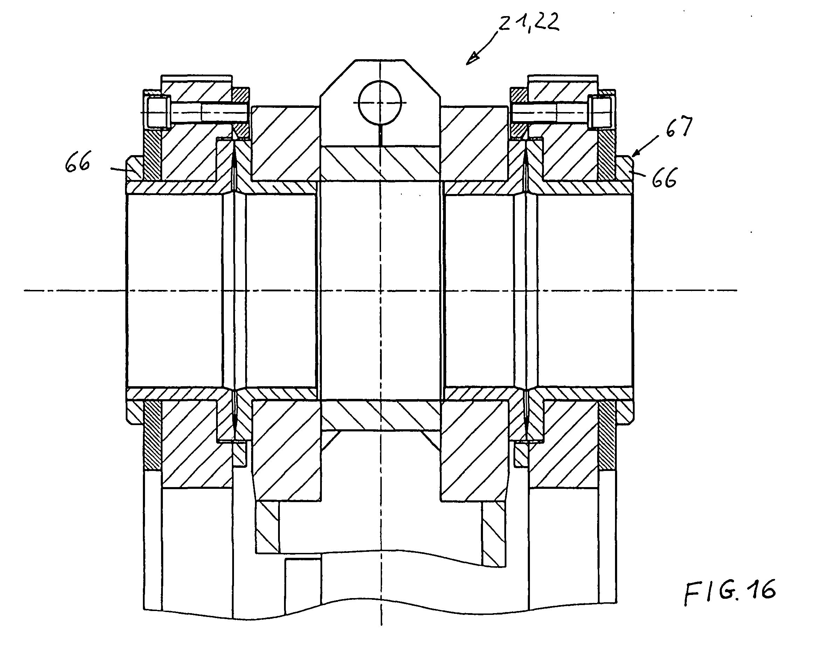

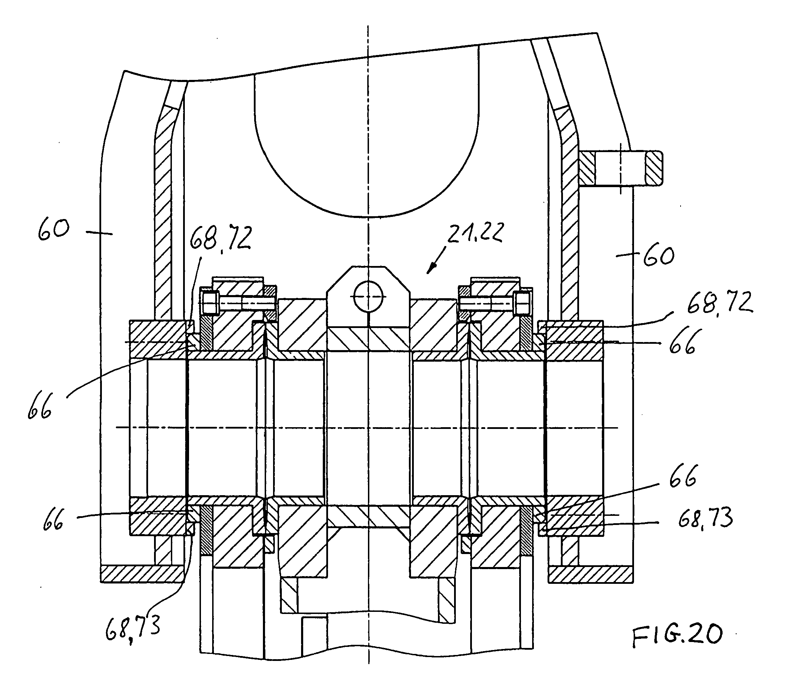

Aus der Darstellung nach Fig. 16 ist erkennbar, dass das Zangenarmpaar beidseitig ringförmige Absätze 66 aufweist, die vorzugsweise mit einer Phase 67 versehen sein können. Diese ringförmigen Absätze 66 dienen einer Vorzentrierung, wenn die Zangenarme in das Halteteil 60 eingeschoben werden. Um die in Fig. 20 dargestellte Einbaulage zwischen dem Halteteil 60 (bzw. dessen Armen) zu erhalten, besitzt das Halteteil an den jeweiligen Innenseiten Anlage- und Zentrierflächen 68, die in dem in Fig. 17 dargestellten Ausführungsbeispiel aus einem halbkreisförmigen Abschnitt 68 mit Einführschrägen 69 bestehen, welche aus der Innenseite hervorragen. Bewegt man das Zangenarmpaar 21, 22 in Richtung des Pfeiles 70, so werden die ringförmigen Absätze 66 über die Einführschrägen 69, die in Richtung des Pfeiles 70 gesehen, eine Verjüngung bilden, im Sinne einer Vorzentrierung geführt. Der hintere Bereich des teilkreisförmigen Abschnittes 68 dient als Endanschlag für Bewegungen in Richtung des Pfeils 70. Nach Einführung des Bolzens in die Bohrung 23 bzw. durch die Einführung des Bolzens wird die Endzentrierung herbeigeführt, wobei die Innenflächen der Anlage- und Zentrierflächen 68, 69 relativ zu den ringförmigen Absätzen in eine berührungsfreie Lage geschoben werden. Zusätzlich besitzt die Innenseite des Halteteils noch eine Schrägfläche 71, die zur Zentrierung des Bauteils parallel zur Bolzenachse 26 dient. Die Fläche 71 ist eine Art "Auflauffläche" (siehe Fig. 18).

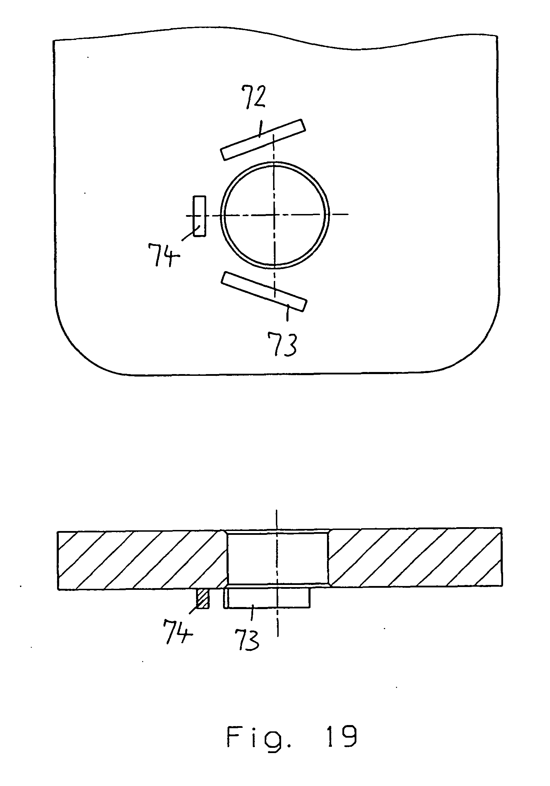

Eine alternative Ausführungsform für die Anlage- und Zentrierfläche am Halterahmen zeigt Fig. 19. Anstelle der teilkreisförmigen Abschnitte 68 mit Einführschrägen 69 werden zwei Zentrierflächen 72, 73 verwendet, die schrägwinklig zueinander angeordnet sind. Den rückwärtigen Anschlag liefert eine Fläche 74.

Diese in Fig. 19 dargestellte Ausführungsform kann selbstverständlich ebenfalls mit einer Schrägfläche 71 "kombiniert" werden.

Im Sinne der vorliegenden Erfindung kann die in den Fig. 16 bis 20 dargestellte Ausbildung der Halteteile-Innenseite und der Außenseiten der Zangenarme auch umgekehrt ausgebildet sein, d. h. dass die ringförmigen Absätze am Halteteil und die Anlage- und Zentrierflächen beidseitig außen den Zangenarmen bzw. an dem U-profilförmigen Zangenarm 22 gewählt werden.

## Patentansprüche

1. Abbruch-Arbeitsgerät zum Anbau an einen Ausleger einer Vorrichtung, insbesondere eines Baggers, mit einem Halterahmen, an dem mittels eines gemeinsamen Bolzens ein Paar von Zangenarmen (21, 22) befestigt ist, von denen mindestens ein Zangenarm um die durch die Längsachse des gemeinsamen Bolzens festgelegte Drehachse (26) so schwenkbar ist, dass die Zangenarme (21, 22) in eine offene und eine geschlossene Stellung bewegbar sind, wobei die Zangenarme (21, 22) Kupplungsmittel aufweisen, die nach Entfernung des gemeinsamen Bolzens eine Verschiebung der Zangenarme in senkrecht zur Drehachse liegenden Richtungen entgegenwirken oder nur über einen begrenzten Weg erlauben, und wobei die Kupplungsmittel auf zwei sich gegenüberliegenden Flachseiten der Zangenarme angeordnet sind und jeweils parallel zur Drehachse (26) verlaufende Mantelflächen aufweisen, die sich entweder aufgrund unterschiedlicher radialer Abstände von der Drehachse (26) spielfrei oder mit geringem Spiel gegenüber liegen oder die in gleichen oder geringfügig unterschiedlichen Radialabständen nebeneinander liegen und von einem Ring (40,50) umgriffen werden, **dadurch gekennzeichnet, dass**
entweder aus einer Zangenarmflachseite ein Ringzylinder (29) herausragt und aus der gegenüberliegenden Zangenarmflachseite mindestens drei Stifte (31), vorzugsweise vier oder mehr Stifte (31), die auf einem Kreisbogen um die Drehachse (26) mit einem Radius liegen, der vom Radius der gegenüberliegenden Mantelflächen des Ringzylinders (29) verschieden ist, wobei die Stifte (31) vorzugsweise als lösbare Bolzen in dem Zangenarm (22) befestigt sind, oder
dass aus einer Flachseite des einen Zangenarmes ein Ringzylinder (29) herausragt und aus der gegenüberliegenden Flachseite des Zangenarmes ein Halbringzylinder (32) herausragt und ein weiteres stiftförmiges oder im wesentlichen quaderförmiges oder ein weiteres teilzylinderförmiges Element (33, 36, 43) lösbar an dem anderen Zangenarm befestigt ist, wobei der Ringzylinder einerseits und der Halbringzylinder sowie das weitere Element andererseits in unterschiedlichen radialen Abständen von der Drehachse (26) angeordnet sind, oder
dass aus beiden gegenüberliegenden Flachseiten jeweils ein Ringzylinder (29, 34) herausragt, wobei die Ringzylinder (29,34) unterschiedliche radiale Abständen zur Drehachse (26) haben.

2. Abbruch-Arbeitsgerät nach Anspruch 1, **dadurch gekennzeichnet, dass** einer der Zangenarme einen im Querschnitt U-förmiges Profil aufweist und der andere Zangenarm zwischen den beiden freien Schenkeln des U-förmigen Profils angeordnet ist, wobei vorzugsweise dieser andere Zangenarm durch ein lösbar befestigtes Sicherungselemente wie einen Bolzen (35), der einen der freien Schenkel durchragt, gegen eine Relativbewegung in Richtung der Drehachse (26) gesichert ist.

3. Abbruch-Arbeitsgerät nach Anspruch 1, **dadurch gekennzeichnet, dass** aus den sich gegenüberliegenden Flachseiten der Zangenarme jeweils zwei konzentrisch zur Drehachse (26) liegende Zylinder oder Teilzylinder herausragen, deren freie Stirnflächen sich gegenüber liegen und deren Außenmantelflächen auf demselben oder geringfügig unterschiedlichen Radien liegen und dass der diese Mantelflächen umgreifende Ring als lösbarer und vorzugsweise aus zwei Hälften bestehender Spannring ausgebildet ist und/oder dass durch die Verschiebung des Spannungsringes in Längsrichtung der Drehachse (26) eine der Mantelflächen freilegbar ist.

4. Abbruch-Arbeitsgerät nach Anspruch 1, **dadurch gekennzeichnet, dass** aus sich gegenüberliegenden Flachseiten der Zangenarme jeweils Zylinderteilstücke (44, 45; 46, 47) herausragen, die auf unterschiedlichen Radien liegen, wobei vorzugsweise sich die innen und außen liegenden Zylinderteilstücke (44, 45; 46, 47) so über jeweilige Winkelmaße erstrecken, dass nach einer relativen Drehung der Zangenarme zueinander die Zylinderstücke quer zur Schwenkachse frei verschiebbar sind.

5. Abbruch-Arbeitsgerät nach einem der Ansprüche 1 bis 4, **dadurch gekennzeichnet, dass** der Halterahmen und das Paar der Zangenarme jeweilige Bauteile bilden, von denen das eine Bauteil beidseitig mit ringförmigen Absätzen (66) und das andere Bauteil mit Anlage- und Zentrierflächen (68, 69; 72, 73, 74) versehen ist, wobei die Absätze und die Anlage- und Zentrierflächen die Bauteile (60; 21, 22, 23) quer zur Längsachse des Bolzens so ausrichten, dass die Bauteile zueinander beim Zusammenführen quer zur Bolzenachse (26) vorzentriert werden, vorzugsweise derart, dass sich die Bauteile beim Einführen des Bolzens noch um ein geringes Maß gegeneinander verschieben und dass bei eingebautem Bolzen die ringförmigen Absätze und die Anlage- und Zentrierflächen nicht mehr in Kontakt sind, d. h. berührungsfrei nebeneinander liegen, wobei die Anlage-und Zentrierflächen vorzugsweise aus teilkreisförmigen Abschnitten (68) mit auslaufenden Einführschrägen (69), die einen Winkel 10°≤α≤90° bilden, bestehen und/oder aus zwei oder mehr winklig zueinander angeordneten Zentrierflächen (72, 73) und/oder einem Endanschlag (74) bestehen.

6. Abbruch-Arbeitsgerät nach Anspruch 5, **dadurch gekennzeichnet, dass** die ringförmigen Absätze (66) Bestandteil der Lagerbuchse sind oder auf der Lagerbuchse zentriert sind oder an dem Halterahmen (60) oder dem Zangenarmpaar (21, 22) befestigt oder Bestandteil dessen sind, wobei die Bauteile (21, 22, 60) vorzugsweise zusätzlich Schrägflächen (67, 71) zur Zentrierung des Bauteils parallel zur Bolzenachse aufweisen dass weiterhin vorzugsweise die Schrägflächen Fasen (67) an ringförmigen Absätzen (66) und/oder schräg zur Querachse verlaufende zusätzliche Flächen (71) an dem Bauteil mit den Anlage- und Zentrierflächen sind.

## Claims

1. Demolition tool, mountable on an working arm of an equipment, preferably of an excavator, with a holding frame, whereon a pair of gripper arms (21, 22) is fixed by a joint pin, at least one of the gripper arms being pivoting about the axis (26) being defined by the longitudinal axis of the joint pin so that the gripping arms (21, 22) can be moved in an open or closed position, whereby the gripping arms (21, 22) comprise coupling means which counteract the displacement or only allow a limited movement of the gripping arms in directions vertical to the said axis after the joint pin was removed, and whereby the coupling means are arranged on two planar flanks of the gripping arms being faced one the other and comprising each lateral areas arranged parallel to the axis (26), the lateral areas lie either due to the different radial distances to the axis (26) free of clearance or with a small clearance face to face or which lie in the same or slightly different radial distance side by side and are encompassed by a ring (40, 50),
**characterized in that** either a circular cylinder (29) projects out of the planar flank of the gripping arm and at least three pins (31), preferably four or more pins (31) lying on a circuit around the axis (26) with a radius which is different from the radius of the facing lateral areas of the ring cylinder (29), project from the opposite planar flank of the gripping arm, whereby the pins (31) are fastened preferably as removable bolts in the gripping arm (22), or
that a circular cylinder (29) projects out of the planar flank of one of the gripping arms and that out of the opposite planar flank of the gripping arm a semicircular cylinder (32) projects and an additional pin-like or substantially prismatic or an additional cylinder-part-like element (33, 36, 43) is fixed removable onto the other gripping arm, whereby the circular cylinder on one side and the semicircular cylinder as well as the additional element on the other side are arranged in different radial distances from the axis (26) or
that out of each opposite planar flanks circular cylinder (29, 34) project having different radial distances to the axis (26).

2. Demolition tool according to claim 1, **characterized in that** one of the gripping arms has a profile with a U-like cross-section and the other gripping arm is arranged between the both free legs of the U-like profile, whereby preferably this other gripping arm is locked against a relative movement in the direction of the axis (26) by a removable fastened retaining element like a bolt (35) which sticks through one of the free legs.

3. Demolition tool according to claim 1, **characterized in that** two cylinder or cylinder parts project out of the opposite planar flanks of the gripping arms and being arranged concentrically to the axis (26), having free faces lying opposite to each other and having outer lateral areas lying on the same or slightly different radii and that the ring surrounding these lateral areas is formed removable and preferably is shaped as a clamping ring comprising 2 halves and/or that one of the lateral areas is uncovered by the displacement of the locking ring in direction of the axis (26).

4. Demolition tool according to claim 1, **characterized in that** cylindrical parts (44, 45; 46, 47) project out of opposite planar flanks of the gripping arms lying on different radii, whereby preferably the inner and outer lying cylindrical parts (44, 45; 46, 47) extend over angular dimensions so that after a relative rotation of the gripping arms to each other the cylindrical parts can be displaced free transverse to the pivoting axis.

5. Demolition tool according to one of the claims 1 to 4, **characterized in that** the holding frame and the pair of gripping arms form component parts, one of which comprises on both sides ring-like shoulders (66) and the other component part has abutment- and centering-faces (68, 69; 72, 73, 74), whereby the shoulders and the abutment- and centering-faces align the components (60; 21, 22, 23) transversal to the longitudinal axis of the bolt so that the components are pre-centered when being combined to each other by a movement transversed to the bolt-axis (26), preferably in a manner, that the components displace one to the other slightly when the bolt is inserted and that the circular shoulders and the abutment- and centering-faces are no longer in contact, that is free of contact side by side, when the bolt is mounted, whereby the abutment- and centering-faces are preferably circular-part-like segments (68) with outrunning an inclined surfaces (69) forming an angle 10° ≤ α ≤ 90° and/or are two or more centering faces (72, 73) angled arranged one to the other and/or are a final abutment (74).

6. Demolition tool according to claim 5, **characterized in that** the circular shoulders (66) are part of a bearing bush or are centered on the bearing bush or are fixed onto the holding frame (60) or onto the pair of gripping arms (21, 22) or are part of them, whereby the components (21, 22, 60) have preferably additional inclined surfaces (67, 71) for centering of the component parallel to the axis of the bolt, that furthermore preferably the inclined surfaces are bevels (67) on circular shoulders (66) and/or are additional surfaces inclined to the transversal axis and arranged onto the component with the abutment- and centering-faces.

## Revendications

1. Outil de travail de démolition destiné à être monté sur une flèche d'un dispositif, en particulier d'une excavatrice, comprenant un cadre de maintien sur lequel est fixée une paire de bras-pince (21, 22) au moyen d'un boulon commun, dont au moins un bras-pince peut pivoter autour de l'axe de rotation (26) défini par l'axe longitudinal du boulon commun, de telle manière que lesdits bras-pince (21, 22) peuvent être déplacés dans une position ouverte et une position fermée, les bras-pince (21, 22) présentant des moyens de couplage qui, après avoir retiré le boulon commun, s'opposent à un déplacement des bras-pince dans des directions perpendiculaires à l'axe de rotation ou n'autorisent celui-ci que sur une distance limitée, et lesdits moyens de couplage étant disposés sur deux faces planes opposées desdits bras-pince et présentant chacun des surfaces latérales s'étendant parallèlement à l'axe de rotation (26) qui, en raison de distances radiales différentes par rapport à l'axe de rotation (26), sont situées en regard les unes des autres soit sans jeu soit avec un faible jeu ou qui sont situées les unes à côté des autres à des distances radiales identiques ou légèrement différentes et sont entourées d'un anneau (40, 50), **caractérisé par le fait que**
soit, un cylindre annulaire (29) fait saillie d'une face plane de bras-pince et au moins trois tiges (31), de préférence quatre tiges (31) ou plus, font saillie de la face plane opposée de bras-pince, qui sont situées sur un arc de cercle autour de l'axe de rotation (26) avec un rayon qui est différent du rayon des surfaces latérales opposées dudit cylindre annulaire (29), lesdites tiges (31) étant fixées, de préférence, en tant que boulons amovibles dans le bras-pince (22),
soit un cylindre annulaire (29) fait saillie d'une face plane de l'un des bras-pince et un cylindre semi-annulaire (32) fait saillie de la face plane opposée du bras-pince et un autre élément en forme de tige ou pour l'essentiel en forme de parallélépipède rectangle ou un autre élément en forme de cylindre partiel (33, 36, 43) est fixé de manière amovible sur l'autre bras-pince, ledit cylindre annulaire d'un côté et ledit cylindre semi-annulaire ainsi que ledit autre élément de l'autre côté étant disposés à des distances radiales différentes par rapport à l'axe de rotation (26),
soit un cylindre annulaire (29, 34) fait saillie respectivement des deux faces planes opposées, lesdits cylindres annulaires (29, 34) présentant des distances radiales différentes par rapport à l'axe de rotation (26).

2. Outil de travail de démolition selon la revendication 1, **caractérisé par le fait que** l'un des bras-pince présente un profil en U en coupe transversale et que l'autre bras-pince est disposé entre les deux branches libres dudit profil en U, de préférence cet autre bras-pince étant immobilisé en mouvement relatif dans le sens de l'axe de rotation (26) au moyen d'un élément de sécurité fixé de manière amovible, tel qu'un boulon (35), qui traverse l'une des branches libres.

3. Outil de travail de démolition selon la revendication 1, **caractérisé par le fait que** desdites faces planes opposées des bras-pince font saillie respectivement deux cylindres ou cylindres partiels qui sont situés concentriquement à l'axe de rotation (26) et dont les surfaces frontales libres sont situées en regard l'une de l'autre et dont les surfaces latérales extérieures sont situées sur les mêmes rayons ou sur des rayons légèrement différents, et que l'anneau entourant ces surfaces latérales est réalisé sous forme d'un anneau de serrage amovible et se composant de préférence de deux moitiés, et/ou que, en déplaçant ledit anneau de serrage dans la direction longitudinale de l'axe de rotation (26), l'une des surfaces latérales peut être dégagée.

4. Outil de travail de démolition selon la revendication 1, **caractérisé par le fait que** des pièces de cylindre (44, 45 ; 46, 47) font saillie respectivement de faces planes opposées des bras-pince, qui sont situées sur des rayons différents, de préférence les pièces de cylindre (44, 45 ; 46, 47) situées à l'intérieur et à l'extérieur s'étendant sur des mesures angulaires respectifs de telle sorte que, après avoir tourné les bras-pince l'un par rapport à l'autre, lesdites pièces de cylindre peuvent être déplacées librement transversalement à l'axe de pivotement.

5. Outil de travail de démolition selon l'une quelconque des revendications 1 à 4, **caractérisé par le fait que** ledit cadre de maintien et la paire de bras-pince forment des composants respectifs dont l'un des composants est pourvu de part et d'autre de talons annulaires (66) et l'autre composant est pourvu de surfaces d'appui et de centrage (68, 69 ; 72, 73, 74), lesdits talons et lesdites surfaces d'appui et de centrage agençant les composants (60 ; 21, 22, 23) transversalement à l'axe longitudinal du boulon de telle sorte que, lors du rapprochement transversal à l'axe de boulon (26), les composants sont pré-centrés les uns par rapport aux autres, de préférence de manière à ce que, lors de l'introduction du boulon, les composants se déplacent encore d'une faible mesure les uns contre les autres et que, lorsque le boulon est monté, les talons annulaires et les surfaces d'appui et de centrage ne sont plus en contact, c'est-à-dire sont situés sans contact les uns à côté des autres, les surfaces d'appui et de centrage se composant de préférence de portions en cercle partiel (68) ayant des pentes d'introduction se terminant (69) qui forment un angle de 10° ≤ α ≤ 90°, et/ou se composant de deux surfaces de centrage (72, 73) ou plus, disposées de façon angulaire les unes par rapport aux autres et/ou d'une butée de fin de course (74).

6. Outil de travail de démolition selon la revendication 5, **caractérisé par le fait que** lesdits talons annulaires (66) font partie intégrante du coussinet ou sont centrés sur le coussinet ou sont fixés sur ledit cadre de maintien (60) ou ladite paire de bras-pince (21, 22) ou en font partie intégrante, les composants (21, 22, 60) présentant, de préférence, en plus des surfaces inclinées (67, 71) pour centrer le composant parallèlement à l'axe de boulon, que, en outre de préférence, les surfaces inclinées sont des chanfreins (67) sur des talons annulaires (66) et/ou des surfaces supplémentaires (71) sur le composant aux surfaces d'appui et de centrage, qui s'étendent de manière oblique à l'axe transversal.
